# FASCICULE DE BREVET EUROPEEN

(11) **EP 0 636 810 B1**
(45) Date de publication et mention de la délivrance du brevet: **21.08.1996**
(21) Numéro de dépôt: 94401730.0
(22) Date de dépôt: 27.07.1994
(51) Int. Cl.: F16F 13/00, B64C 27/51

(54) **Perfectionnement aux supports antivibratoires de pales d'hélicoptères et rotor d'hélicoptère comportant de tels supports**
Verbesserung an den Gegenschwingungslagern von Hubschrauberrotorflügeln, und Hubschrauberrotor mit solchen Lagern
Improvement for damping supports of helicopter rotor blades and helicopter rotor with such supports

(30) Priorité: 29.07.1993 FR 9309358
(43) Date de publication de la demande: 01.02.1995
(73) Titulaire: HUTCHINSON, F-75384 Paris Cédex 08 (FR)
(72) Inventeur: Levallard, Patrice, F-94360 Bry Sur Marne (FR)
(74) Mandataire: Burbaud, Eric

(56) Documents cités:
- EP-A- 0 057 774
- EP-A- 0 097 091
- EP-A- 0 134 839
- EP-A- 0 322 239
- EP-A- 0 452 169
- EP-A- 0 492 063
- DE-A- 1 625 389
- DE-A- 2 921 828
- DE-A- 4 034 573
- US-A- 3 202 412
- PATENT ABSTRACTS OF JAPAN vol. 14, no. 209 (M-968) (4152) 27 Avril 1990 & JP-A-02 046 336 (TOYO TIRE & RUBBER CO LTD) 15 Février 1990

## Description

L'invention concerne les supports antivibratoires de pales d'hélicoptère, et plus particulièrement les dispositifs antivibratoires pour le montage de pales d'hélicoptères, ces dispositifs comportant :
- une première et une deuxième armatures rigides solidarisables respectivement avec deux éléments rigides à réunir, chaque armature présentant une face d'appui dirigée vers l'autre armature rigide, les deux faces d'appui étant disposées en regard l'une de l'autre et perpendiculairement à un premier axe Z,
- et au moins un élément lamifié interposé entre les deux faces d'appui, ledit élément lamifié présentant deux faces opposées qui sont solidaires respectivement des deux faces d'appui, ledit élément lamifié étant constitué de couches alternées de matériau rigide et d'élastomère qui sont disposées perpendiculairement au premier axe Z, ledit élément lamifié permettant, par sa déformation, un déplacement relatif des deux armatures selon un deuxième axe Y perpendiculaire au premier axe Z.

Ce type de dispositif est également employé dans le domaine des supports de bâtiment ainsi que le montre le document DE-A-2 921 828.

Ainsi, les deux armatures rigides ne peuvent quasiment pas se déplacer l'une par rapport à l'autre selon le premier axe Z du fait de la grande raideur de l'élément lamifié parallèlement à l'axe Z, tandis que leur mouvement relatif est possible parallèlement au deuxième axe Y. L'axe Z est orthogonal aux pales du rotor.

Dans ces dispositifs, il est souhaitable d'amortir au maximum les mouvements vibratoires ou oscillations relatifs des armatures parallèlement au deuxième axe Y.

Une solution connue de ce problème technique est d'utiliser dans les couches élastomères de l'élément lamifié, un élastomère au silicone, plus amortisseur que les élastomères classiques et qui apporte à la fois la raideur et l'amortissement souhaités.

Toutefois, avec de tels éléments lamifiés, l'obtention d'un niveau d'amortissement important se fait au détriment de la durée de vie.

La présente invention a pour but, surtout, de remédier à cet inconvénient.

A cet effet, les dispositifs antivibratoires du genre en question sont essentiellement caractérisés en ce qu'ils comportent en outre un amortisseur hydraulique qui présente au moins deux poches étanches déformables reliées par un canal étranglé, les deux poches étanches et le canal étranglé étant remplis d'un liquide, chaque poche étanche étant au moins partiellement délimitée par une paroi déformable qui s'étend entre une première extrémité solidaire de la première armature et une deuxième extrémité solidaire de la deuxième armature, ladite paroi déformable permettant, par sa déformation, un mouvement relatif desdites première et deuxième extrémités parallèlement au deuxième axe Y.

Ainsi, les mouvements vibratoires ou oscillations relatifs des deux armatures selon l'axe Y produisent des transferts de liquide d'une poche étanche à l'autre par le canal étranglé. Pour certaines fréquences et amplitudes du mouvement vibratoire, qui dépendent des dimensions du canal étranglé, ledit canal étranglé est le siège de pertes de charge et de phénomènes de résonance propres à amortir très efficacement la transmission de ces oscillations d'une armature à l'autre.

Du fait que l'amortissement dans la direction de l'axe y est assuré par le canal étranglé et les poches étanches, on peut utiliser pour les éléments lamifiés un élastomère peu amorti, mais de grande durée de vie sous sollicitations dynamiques.

De plus, la raideur en cisaillement des éléments lamifiés peut être ajustée indépendamment de la valeur de l'amortissement selon l'axe Y.

Dans les modes de réalisation préférés, on a recours à l'une et/ou à l'autre des dispositions suivantes :
- la paroi déformable de chaque poche étanche est réalisée en élastomère et exerce une force de rappel élastique sur les armatures lorsqu'elle est déformée, ce qui permet à la paroi déformable de participer à l'obtention des raideurs et amortissements nécessaires pour limiter les vibrations ;
- les parois déformables des deux poches étanches sont des parois latérales qui délimitent lesdites poches étanches perpendiculairement au deuxième axe Y, les parois déformables étant formées d'une seule pièce dans un corps en élastomère qui présente une partie centrale raccordée de façon étanche à la première extrémité des parois latérales, cette partie centrale délimitant un logement qui s'étend parallèlement au premier axe Z et qui est ouvert du côté de la première armature, ledit logement communiquant avec les deux poches étanches respectivement par deux ouvertures, la première armature comportant un organe de fixation qui est engagé en contact étanche dans le logement, le canal étranglé qui relie les deux poches étanches étant formé dans l'organe de fixation et communiquant avec les ouvertures du logement ;
- les parois déformables vont en s'évasant vers leur deuxième extrémité ;
- le corps en élastomère est logé à l'intérieur d'une paroi périphérique rigide, qui s'étend selon le premier axe Z à partir de la deuxième armature, la deuxième extrémité 6₂ de chaque paroi déformable étant fixée à ladite paroi périphérique rigide, ladite paroi périphérique rigide étant encadrée par deux éléments lamifiés selon un troisième axe X perpendiculaire aux premier et deuxième axes, la paroi périphérique rigide constituant une butée qui limite les déformations des deux éléments lamifiés parallèlement au troisième axe X ;
- la deuxième extrémité de chaque paroi déformable est solidaire d'un cadre rigide et forme avec ledit cadre un rebord périphérique extérieur, sur lequel est sertie une plaque métallique qui ferme ladite deuxième extrémité de la paroi déformable ;
- le corps en élastomère comporte en outre deux poches étanches supplémentaires similaires aux poches étanches susmentionnées, les poches étanches supplémentaires étant alignées selon un troisième axe X perpendiculaire aux premier et deuxième axes, le logement comportant deux ouvertures supplémentaires qui communiquent respectivement avec les deux poches étanches supplémentaires, l'organe de fixation comportant un canal étranglé supplémentaire qui communique avec les deux ouvertures supplémentaires pour relier les deux poches étanches supplémentaires, la deuxième extrémité de chaque paroi déformable étant solidaire d'une paroi annulaire rigide qui s'étend selon le premier axe à partir de la deuxième armature, l'élément lamifié étant lui-même annulaire et disposé autour de la paroi annulaire rigide ;
- chaque poche étanche supplémentaire est contiguë aux deux poches étanches qui amortissent les vibrations selon l'axe Y, et les parois déformables comportent des cloisons radiales qui sont communes à deux poches étanches contiguës ;
- chaque paroi déformable est une membrane souple qui présente une symétrie de révolution autour du deuxième axe Y, la deuxième extrémité de la paroi déformable étant fixée à un doigt rigide qui est disposé selon le deuxième axe Y et qui est solidaire de la deuxième armature, ladite deuxième extrémité de la paroi déformable étant adaptée à pénétrer à l'intérieur de ladite paroi déformable en formant au moins un pli annulaire ;
- la membrane souple est réalisée en élastomère et comporte en outre un renfort choisi dans le groupe comprenant les fibres, les fils, les tissus, et les anneaux rigides ;
- le dispositif comporte deux bagues de guidage qui sont solidaires de la première armature et qui présentent chacune une surface intérieure disposée autour d'une des membranes souples et conformée pour guider ladite membrane souple et lui servir d'appui, chaque doigt rigide présentant par ailleurs une surface extérieure également conformée pour guider une desdites membranes souples et lui servir d'appui;

L'invention a également pour objet un rotor d'hélicoptère comportant un moyeu qui présente un axe de rotation et des pales fixées au moyeu qui s'étendent chacune selon un axe longitudinal sensiblement perpendiculaire à l'axe de rotation, caractérisé en ce que chaque pale est fixée au moyeu par l'intermédiaire d'au moins un dispositif antivibratoire tel que défini ci-dessus, l'une des armatures de ce dispositif antivibratoire étant liée au moyeu et son autre armature étant liée à la pale, le premier axe du dispositif antivibratoire étant parallèle à l'axe de rotation du moyeu et le deuxième axe dudit dispositif antivibratoire étant parallèle à l'axe longitudinal de la pale.

D'autres caractéristiques et avantages de l'invention apparaîtront au cours de la description suivante de plusieurs formes de réalisation de ladite invention, données à titre d'exemples non limitatifs, en regard des dessins joints.

Sur les dessins :
- la figure 1 est une vue en coupe d'un dispositif antivibratoire selon une première forme de réalisation de l'invention, suivant la ligne I-I de la figure 2,
- la figure 1A est une vue de détail de la figure 1,
- la figure 2 est une vue en coupe du dispositif de la figure 1, prise selon la ligne II-II de la figure 1,
- la figure 3 est une autre vue en coupe du dispositif de la figure 1, prise selon la ligne III-III de la figure 2,
- la figure 4 est une vue en élévation du dispositif de la figure 1, selon la direction IV de la figure 3,
- la figure 5 est une vue en coupe similaire à la figure 2, pour une deuxième forme de réalisation de l'invention,
- la figure 6 est une vue en coupe similaire à la figure 1, pour une troisième forme de réalisation de l'invention,
- la figure 7 représente une variante du support antivibratoire de la figure 6, et
- la figure 8 est une vue très schématique illustrant l'utilisation des supports antivibratoires selon l'invention pour le montage de pales d'hélicoptère.

Sur les différentes figures, les mêmes références désignent des éléments identiques ou similaires.

Dans tous les cas, le dispositif antivibratoire de l'invention est destiné à être interposé entre deux éléments rigides, et comporte :
- une première et une deuxième armatures rigides, respectivement 1, 2, qui sont solidarisables respectivement avec deux éléments rigides à réunir, chaque armature présentant une face d'appui, respectivement 3, 4, dirigée vers l'autre armature rigide, les deux faces d'appui étant disposées en regard l'une de l'autre et perpendiculairement à un premier axe Z,
- au moins un élément lamifié 5 ou 5', interposé entre les deux faces d'appui 3, 4, ledit élément lamifié étant constitué de couches alternées de matériau rigide, notamment métallique, et d'élastomère, qui sont disposées perpendiculairement au premier axe Z.

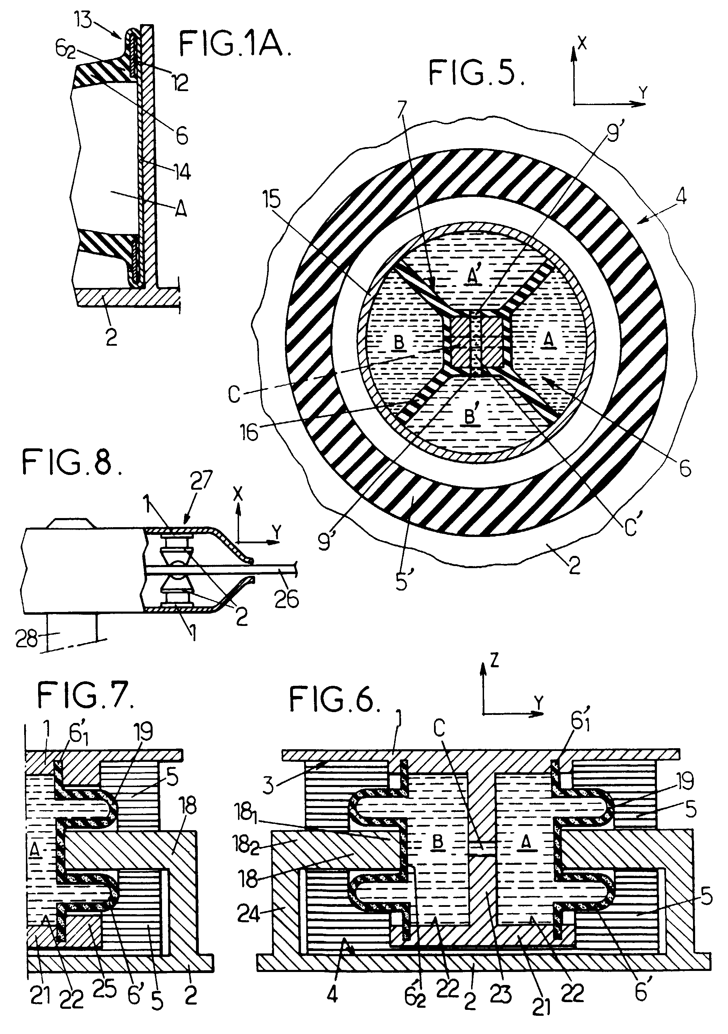

L'élément lamifié 5 ou 5' présente deux faces opposées qui sont solidaires respectivement des deux armatures 1, 2. Il présente une grande raideur parallèlement à l'axe Z, de sorte que les deux armatures ne peuvent pas se déplacer l'une par rapport à l'autre parallèlement à l'axe Z. Par contre, cet élément lamifié est déformable perpendiculairement à l'axe Z, c'est-à-dire selon deux axes X, Y perpendiculaires à l'axe Z, de sorte qu'un déplacement relatif entre les deux armatures est possible selon les axes X et Y. A titre d'exemple, la déformation des éléments lamifiés selon l'axe Y est représentée en pointillés sur la figure 4 de façon exagérée. La raideur du dispositif selon les axes X et Y est essentiellement déterminée par l'élément lamifié.

De plus, le dispositif inclut un amortisseur hydraulique, destiné à amortir les vibrations entre les deux armatures dans la direction de l'axe Y. L'amortisseur hydraulique présente dans tous les cas, au moins deux poches étanches A, B, qui sont déformables et reliées par un canal étranglé C, les deux poches étanches et le canal étranglé étant remplis d'un liquide, éventuellement pressurisé.

Les deux poches étanches sont alignées parallèlement à l'axe Y, et chaque poche étanche est délimitée partiellement par une paroi déformable 6 ou 6', qui s'étend entre une première extrémité 6₁ ou 6₁' solidaire de la première armature 1, et une deuxième extrémité 6₂ ou 6₂' solidaire de la deuxième armature 2. Les parois déformables permettent un mouvement relatif des deux armatures parallèlement à l'axe Y.

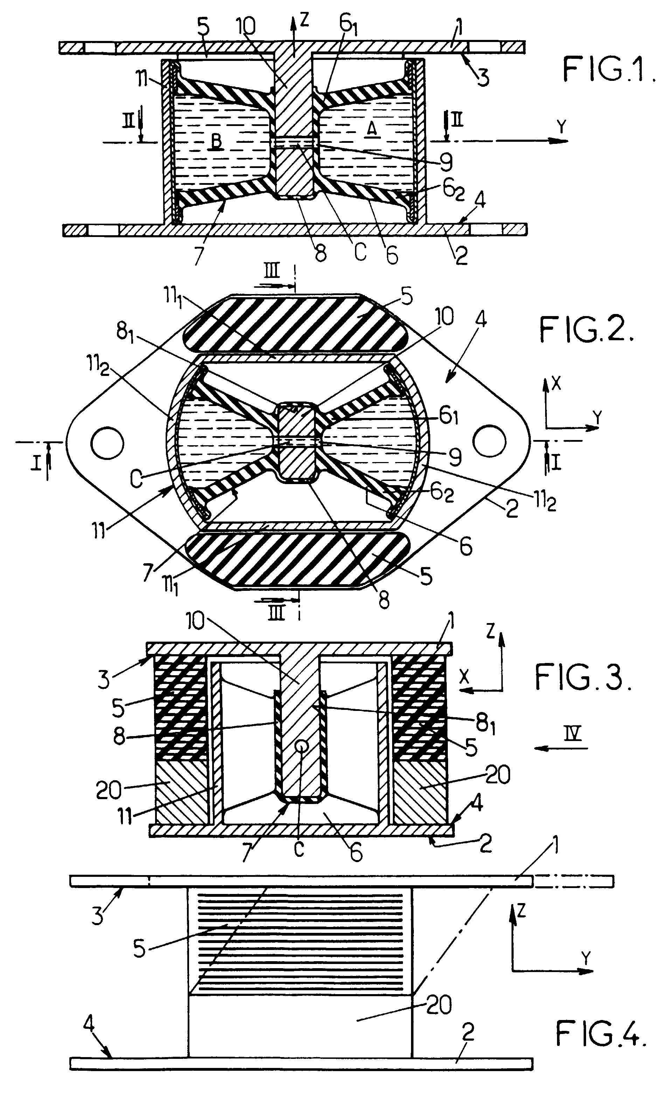

Dans la première forme de réalisation de l'invention, représentée sur les figures 1 à 4, les parois déformables 6 des deux poches étanches A et B sont des parois latérales en forme de tronc de pyramide à base carrée ou rectangulaire, qui s'étendent parallèlement à l'axe Y, depuis leur première extrémité 6₁ jusqu'à leur deuxième extrémité 6₂, en s'élargissant vers leur deuxième extrémité 6₂.

Les parois déformables 6 sont formées d'une seule pièce dans un corps en élastomère 7, qui présente une partie centrale 8 raccordée de façon étanche à la première extrémité 6₁ desdites parois déformables. Cette partie centrale 8 délimite un logement 8₁ qui s'étend parallèlement à l'axe Z, et qui est ouvert du côté de la première armature 1. Ce logement 8₁ communique avec les deux poches étanches A et B par deux ouvertures 9.

La première armature 1 comporte une tige de fixation 10, qui est engagée en contact étanche dans le logement 8₁, et le canal étranglé C qui relie les deux poches étanches est un alésage percé dans la tige de fixation 10, qui communique avec les ouvertures 9 du logement 8₁.

Pour simplifier les dessins, la tige de fixation 10 a été représentée comme formée d'une seule pièce avec la première armature 1. En réalité, cette tige 10 est une pièce distincte de l'armature 1: le corps en élastomère 7 est d'abord surmoulé sur la tige 10, puis la tige 10 est fixée rigidement à l'armature 1, par exemple par vissage.

Le corps en élastomère 7 est situé à l'intérieur d'une paroi périphérique rigide 11, qui est solidaire de la deuxième armature 2, et qui s'étend selon l'axe Z à partir de la deuxième armature. Cette paroi périphérique 11, vue en coupe selon un plan perpendiculaire à l'axe Z, comporte deux parties planes en regard 11₁, parallèles à l'axe Y, raccordées latéralement l'une à l'autre par deux parties courbes 11₂ en arc de cercle, la concavité des parties courbes 11₂ étant tournée vers l'intérieur de la paroi périphérique.

La paroi périphérique rigide 11 est encadrée par deux éléments lamifiés 5, selon l'axe X. Dans l'exemple représenté, ces éléments sont fixés à des embases 20 rigides, elles-mêmes fixées à la face d'appui 4 de la deuxième armature.

Les parties planes 11₁ de la paroi périphérique rigide 11 constituent des butées qui limitent la déformation des éléments lamifiés 5 parallèlement à l'axe X, et limitent ainsi le déplacement relatif des deux armatures 1 et 2 parallèlement à l'axe X.

La deuxième extrémité 6₂ de chaque paroi déformable 6 est solidaire d'un cadre rigide 12, généralement métallique, et elle forme avec ce cadre un rebord périphérique extérieur 13, sur lequel est sertie une plaque métallique 14 qui ferme ladite deuxième extrémité de la paroi déformable 6.

Les plaques métalliques 14 ont une forme complémentaire des parties courbes 11₂ de la paroi périphérique rigide 11, et prennent appui sur lesdites parties courbes pour solidariser la deuxième extrémité 6₂ de chaque paroi déformable 6 avec la deuxième armature 2.

Lorsque la première armature 1 est soumise à des vibrations ou oscillations dans la direction de l'axe Y, le liquide est transféré alternativement d'une poche étanche à l'autre par l'intermédiaire du canal étranglé C. Pour certaines fréquences et amplitudes de vibrations, le canal étranglé C devient le siège de pertes de charge et de phénomènes de résonance qui amortissent considérablement les vibrations, de sorte que lesdites vibrations sont transmises de façon atténuée à la deuxième armature 2.

De plus, les parois déformables 6 ont un effet de rappel élastique de la première armature 1, et participent ainsi à l'amortissement des vibrations, en association avec les éléments lamifiés.

La deuxième forme de réalisation de l'invention, représentée sur la figure 5, présente de nombreux points communs avec la première forme de réalisation. Toutefois, le dispositif ne comporte plus deux éléments lamifiés 5, mais un seul élément lamifié 5' de forme annulaire, constitué par un empilement de rondelles constituées alternativement en métal et en élastomère, élément disposé autour de la paroi périphérique rigide 15, qui est ici circulaire.

De plus, le corps en élastomère 7 comporte en outre deux poches étanches supplémentaires A' et B', identiques aux poches étanches A et B, mais alignées selon l'axe X.

Par ailleurs, le logement 8₁ comporte deux ouvertures supplémentaires 9', qui communiquent respectivement avec les deux poches étanches supplémentaires A' et B', et la tige de fixation 10 comporte un deuxième alésage C' percé parallèlement à l'axe X à une hauteur différente de l'alésage C, et qui constitue un canal étranglé supplémentaire communiquant avec les deux poches étanches supplémentaires A' et B' par l'intermédiaire des deux ouvertures supplémentaires 9' du logement 8₁.

Enfin, chaque poche étanche supplémentaire A',B', est contiguë aux deux poches étanches A et B, et les parois déformables 6 qui délimitent les poches étanches comportent des cloisons radiales 16 qui sont communes à deux chambres contiguës.

Dans la troisième forme de réalisation de l'invention, représentée sur la figure 6, chaque paroi déformable est une membrane souple 6', qui présente une symétrie de révolution autour de l'axe Y. Cette membrane peut être réalisée par exemple en élastomère renforcé par des fibres, fils ou tissus ou par des anneaux rigides concentriques à l'axe Y. La membrane 6' peut également être réalisée sous la forme d'une paroi mince de métal ou d'un autre matériau à module élastique élevé.

La première armature 1 comporte un corps 21 rigide, qui est situé du côté de la deuxième armature 2, et qui délimite deux chambres cylindriques 22 ayant une forme de révolution autour de l'axe Y. Ces chambres cylindriques 22 sont ouvertes axialement vers l'extérieur, et sont séparées par une cloison 23 plane et perpendiculaire à l'axe Y, dans laquelle est percé un alésage constituant le canal étranglé C.

La deuxième armature 2 comporte deux doigts 18 qui s'étendent chacun parallèlement à l'axe Y, entre une première extrémité 18₁ qui est libre et située du côté de la cloison 23, et une deuxième extrémité 18₂ fixée à la deuxième armature 2 par un support vertical 24.

La première extrémité de chaque membrane souple 6' est un bord périphérique externe 6₁' de ladite membrane, qui est fixé à l'intérieur de l'une des chambres cylindriques 22. En outre, la deuxième extrémité 6₂' de chaque membrane souple est constituée par le centre de ladite membrane, qui est fixée à l'extrémité libre 18₁ d'un des doigts 18.

Chaque membrane souple 6' forme un pli annulaire 19 autour du doigt 18 correspondant, de sorte que ladite membrane souple 6' permet un débattement important entre les deux armatures 1 et 2 selon l'axe Y. La membrane souple pourrait également avoir une forme de soufflet présentant plusieurs ondes ou plis annulaires, des anneaux rigides de renforcement pouvant éventuellement être prévus au niveau de ces plis.

Comme dans l'exemple de la figure 1, l'amortisseur hydraulique est encadré selon l'axe X par deux éléments lamifiés 5. Comme dans la première forme de réalisation, ceux-ci peuvent se déformer parallèlement à l'axe Y, mais leur déformation parallèlement à l'axe X est limitée par butée contre le corps 21.

Cette configuration permet de grands débattements, avec une raideur faible selon l'axe Y, mais une grande résistance à la pression.

Comme représenté sur la figure 7, pour limiter la dilatation de la membrane souple 6' en cours de fonctionnement, où elle est soumise à une pression interne élevée, on peut prévoir un guide annulaire 25 concentrique à chaque doigt 18 et solidaire de la première armature 1, sur la surface intérieure duquel la membrane 6' peut prendre appui, ladite membrane prenant par ailleurs appui sur la surface extérieure du doigt 18.

Ce guide peut présenter une surface interne cylindrique de révolution, ou bien comportant des ondulations ou autres formes annulaires pour guider la membrane 6'.

Un montage possible de pales 26 d'hélicoptère dans un rotor 27 d'hélicoptère est donné à titre d'exemple sur la figure 8.

Dans ce montage, chaque pale d'hélicoptère 26 est fixée aux deuxièmes armatures 2 de deux dispositifs antivibratoires tels que décrits ci-dessus, ces deux dispositifs antivibratoires étant disposés de part et d'autre du plan de la pale 26 et l'axe Y de ces deux dispositifs antivibratoires étant parallèle à la direction longitudinale de la pale 26.

Par ailleurs, les premières armatures 1 des deux dispositifs antivibratoires sont fixées au moyeu 28 du rotor, qui présente un axe de rotation parallèle à l'axe Z des supports antivibratoires.

## Revendications

1. Dispositif antivibratoire destiné à être interposé entre deux éléments rigides pour le montage des pales d'hélicoptères, ce dispositif comportant :
- une première (1) et une deuxième (2) armatures rigides solidarisables respectivement avec les deux éléments rigides à réunir, chaque armature (1,2) présentant une face d'appui (3,4) dirigée vers l'autre armature rigide, les deux faces d'appui étant disposées en regard l'une de l'autre et perpendiculairement à un premier axe (Z),
- et au moins un élément lamifié (5, 5') interposé entre les deux faces d'appui (3,4), ledit élément lamifié présentant deux faces opposées qui sont solidaires respectivement des deux faces d'appui, ledit élément lamifié étant constitué de couches alternées de matériau rigide et d'élastomère qui sont disposées perpendiculairement au premier axe (Z), ledit élément lamifié permettant, par sa déformation, un déplacement relatif des deux armatures selon un deuxième axe (Y) perpendiculaire au premier axe (Z), **caractérisé en ce qu'**il comporte en outre un amortisseur hydraulique qui présente au moins deux poches étanches (A,B) déformables reliées par un canal étranglé (C), les deux poches étanches et le canal étranglé étant remplis d'un liquide, chaque poche étanche étant au moins partiellement délimitée par une paroi déformable (6, 6') qui s'étend entre une première extrémité (6₁, 6₁') solidaire de la première armature (1) et une deuxième extrémité (6₂, 6₂') solidaire de la deuxième armature (2), ladite paroi déformable permettant, par sa déformation, un mouvement relatif desdites première et deuxième extrémités parallèlement au deuxième axe (Y).

2. Dispositif selon la revendication 1, dans lequel la paroi déformable (6) de chaque poche étanche est réalisée en élastomère et exerce une force de rappel élastique sur les armatures (1, 2) lorsqu'elle est déformée.

3. Dispositif selon l'une quelconque des revendications 1 et 2, dans lequel les parois déformables (6) des deux poches étanches (A, B) sont des parois latérales qui délimitent lesdites poches étanches perpendiculairement au deuxième axe (Y), les parois déformables (6) étant formées d'une seule pièce dans un corps en élastomère (7) qui présente une partie centrale (8) raccordée de façon étanche à la première extrémité (6₁) desdites parois déformables, cette partie centrale délimitant un logement (8₁) qui s'étend parallèlement au premier axe Z et qui est ouvert du côté de la première armature (1), ledit logement communiquant avec les deux poches étanches (A,B) respectivement par deux ouvertures (9), la première armature comportant un organe de fixation (10) qui est engagé en contact étanche dans le logement (8₁), le canal étranglé (C) qui relie les deux poches étanches étant formé dans l'organe de fixation et communiquant avec les ouvertures (9) du logement (8₁).

4. Dispositif selon la revendication 3, dans lequel les parois déformables (6) vont en s'évasant vers leur deuxième extrémité (6₂).

5. Dispositif selon l'une quelconque des revendications 3 et 4, dans lequel le corps en élastomère (7) est logé à l'intérieur d'une paroi périphérique rigide (11), qui s'étend selon le premier axe (Z) à partir de la deuxième armature (2), la deuxième extrémité (6₂) de chaque paroi déformable étant fixée à ladite paroi périphérique rigide, ladite paroi périphérique rigide étant encadrée par deux éléments lamifiés (5) selon un troisième axe (X) perpendiculaire aux premier (Z) et deuxième (Y) axes, la paroi périphérique rigide constituant une butée qui limite les déformations des deux éléments lamifiés parallèlement au troisième axe (X).

6. Dispositif selon l'une quelconque des revendications 3 à 5, dans lequel la deuxième extrémité (6₂) de chaque paroi déformable est solidaire d'un cadre rigide (12) et forme avec ledit cadre un rebord périphérique extérieur (13), sur lequel est sertie une plaque métallique (14) qui ferme ladite deuxième extrémité de la paroi déformable.

7. Dispositif selonla revendication 4, selon lequel le corps en élastomère (7) comporte en outre deux poches étanches supplémentaires (A', B') similaires aux poches étanches (A, B) susmentionnées, les poches étanches supplémentaires (A', B') étant alignées selon un troisième axe (X) perpendiculaire aux premier (Z) et deuxième (Y) axes, le logement (8₁) comportant deux ouvertures supplémentaires (9') qui communiquent respectivement avec les deux poches étanches supplémentaires, l'organe de fixation (10) comportant un canal étranglé supplémentaire (C') qui communique avec les deux ouvertures supplémentaires (9') pour relier les deux poches étanches supplémentaires (A', B'), la deuxième extrémité de chaque paroi déformable (6) étant solidaire d'une paroi annulaire rigide (15) qui s'étend selon le premier axe (Z) à partir de la deuxième armature (2), l'élément lamifié (5') étant lui-même annulaire et disposé autour de la paroi annulaire rigide (15).

8. Dispositif selon la revendication 7, dans lequel chaque poche étanche supplémentaire (A',B') est contiguë aux deux poches étanches (A, B) qui amortissent les vibrations selon le deuxième axe (Y), et les parois déformables (6) comportent des cloisons radiales (16) qui sont communes à deux poches étanches contiguës.

9. Dispositif selon la revendication 1, dans lequel chaque paroi déformable est une membrane souple (6') qui présente une symétrie de révolution autour du deuxième axe (Y), la deuxième extrémité (6₂') de la paroi déformable étant fixée à une doigt rigide (18) qui est disposé selon le deuxième axe (Y) et qui est solidaire de la deuxième armature, ladite deuxième extrémité de la paroi déformable étant adaptée à pénétrer à l'intérieur de ladite paroi déformable en formant au moins un pli annulaire (19).

10. Dispositif selon la revendication 9, dans lequel la membrane souple (6') est réalisée en élastomère et comporte en outre un renfort choisi dans le groupe comprenant les fibres, les fils, les tissus, et les anneaux rigides.

11. Dispositif selon l'une quelconque des revendications 9 et 10, comportant en outre deux bagues de guidage (25) qui sont solidaires de la première armature (1) et qui présentent chacune une surface intérieure disposée autour d'une des membranes souples (6') et conformée pour guider ladite membrane souple et lui servir d'appui, chaque doigt rigide (18) présentant par ailleurs une surface extérieure également conformée pour guider une desdites membranes souples et lui servir d'appui.

12. Rotor d'hélicoptère (27) comportant un moyeu (28) qui présente un axe de rotation et des pales (26) fixées au moyeu (28) qui s'étendent chacune selon un axe longitudinal sensiblement perpendiculaire à l'axe de rotation,
**caractérisé en ce que** chaque pale (26) est fixée au moyeu (28) par l'intermédiaire d'au moins un dispositif antivibratoire selon l'une quelconque des revendications précédentes, l'une des armatures (1, 2) de ce dispositif antivibratoire étant liée au moyeu (28) et son autre armature étant liée à la pale (26), le premier axe (Z) du dispositif antivibratoire étant parallèle à l'axe de rotation du moyeu et le deuxième axe (Y) dudit dispositif antivibratoire étant parallèle à l'axe longitudinal de la pale.

## Patentansprüche

1. Antischwingungslager für den Einbau zwischen zwei starren Elementen zur Montage von Hubschrauberflügeln, das aus folgenden Teilen besteht:
- einer ersten starren Armatur (1) und einer zweiten starren Armatur (2), die jeweils an einem der beiden zu verbindenden Elemente anbringbar sind, wobei jede Armatur (1, 2) eine Stützfläche (3, 4) aufweist, die gegen die andere starre Armatur gerichtet ist und die beiden Stützflächen einander gegenüberliegend und senkrecht zu einer ersten Achse (Z) angeordnet sind,
- und wenigstens einem Schichtelement (5, 5'), das zwischen den beiden Stützflächen (3, 4) eingesetzt ist und zwei sich gegenüberliegende Flächen aufweist, die jeweils mit einer der beiden Stützflächen verbunden sind, wobei das Schichtelement aus sich abwechselnden Schichten von starrem und elastomerem Material besteht, die senkrecht zu der ersten Achse (Z) angeordnet sind, und wobei das Schichtelement infolge seiner Deformation eine Relativbewegung der beiden Armaturen längs einer zweiten Achse (Y) ermöglicht, die senkrecht zu der ersten Achse (Z) verläuft,
dadurch gekennzeichnet, daß das Lager ferner eine hydraulische Dämpfungseinrichtung enthält, die wenigstens zwei dichte Taschen (A, B) aufweist, die deformierbar sind und über einen verengten Kanal (C) miteinander in Verbindung stehen, wobei die beiden dichten Taschen und der verengte Kanal mit einer Flüssigkeit gefüllt sind und jede dichte Tasche wenigstens teilweise durch eine deformierbare Wandung (6, 6') begrenzt wird, die sich zwischen einem ersten Ende (6₁, 6₁'), das mit der ersten Armatur (1) verbunden ist, und einem zweiten Ende (6₂, 6₂'), das mit der zweiten Armatur (2) verbunden ist, erstreckt und wobei die deformierbare Wandung infolge ihrer Deformation eine Relativbewegung des ersten und des zweiten Endes parallel zur zweiten Achse (Y) zuläßt.

2. Lager nach Anspruch 1, bei dem die deformierbare Wandung (6) jeder dichten Tasche aus elastomerem Material besteht und auf die Armaturen (1, 2) eine elastische Rückstellkraft ausübt, wenn sie deformiert wird.

3. Lager nach einem der vorhergehenden Ansprüche 1 und 2, bei dem die deformierbaren Wandungen (6) der beiden dichten Taschen (A, B) seitliche Wandungen sind, die die dichten Taschen senkrecht zur zweiten Achse (Y) begrenzen, wobei die deformierbaren Wandungen (6) aus einem einzigen Stück in einem Körper (7) aus elastomerem Material gebildet sind, der einen mittleren Abschnitt (8) aufweist, der dicht mit dem ersten Ende (6₁) der deformierbaren Wandung verbunden ist, wobei dieser mittlere Abschnitt einen Sitz (8₁) begrenzt, der sich parallel zur ersten Achse (Z) erstreckt und der auf der Seite der ersten Armatur (1) offen ist, wobei der Sitz mit den beiden dichten Taschen (A, B) über zwei entsprechende Öffnungen (9) in Verbindung steht und die erste Armatur ein Befestigungsorgan (10) enthält, das in dichtem Kontakt in den Sitz (8₁) eingesetzt ist, wobei der verengte Kanal (C), der die beiden Taschen verbindet, in dem Befestigungsorgan gebildet ist und mit den beiden Öffnungen (9) des Sitzes (8₁) in Verbindung steht.

4. Lager nach Anspruch 3, bei dem die deformierbaren Wände (6) sich zu einem zweiten Ende (6₂) hin konisch erweitern.

5. Lager nach einem der Ansprüche 3 und 4, bei dem der Körper (7) aus elastomerem Material im Innern einer starren, umlaufenden Wand (11) angeordnet ist, die sich ausgehend von der zweiten Armatur (2) gemäß der ersten Achse (Z) erstreckt, wobei das zweite Ende (6₂) jeder deformierbaren Wandung fest mit der starren, umlaufenden Wand verbunden ist und die starre, umlaufende Wand von zwei Schichtelementen (5) gemäß einer dritten Achse (X) eingefaßt ist, die senkrecht zu der ersten Achse (Z) und zweiten Achse (Y) verläuft und wobei die starre, umlaufende Wand einen Anschlag bildet, der die Verformungen der beiden Schichtelemente parallel zur dritten Achse (X) begrenzt.

6. Lager nach einem der Ansprüche 3 bis 5, bei dem das zweite Ende (6₂) jeder deformierbaren Wandung fest mit einem starren Rahmen (12) verbunden ist und mit diesem Rahmen einen umlaufenden, äußeren Rand (13) bildet, in den eine Metallplatte (14) eingelassen ist, die das zweite Ende der deformierbaren Wandung absperrt.

7. Lager nach Anspruch 4, bei dem der Körper (7) aus elastomerem Material ferner zwei zusätzliche dichte Taschen (A', B') enthält, die ähnlich wie die vorstehend erwähnten Taschen (A, B) sind und die gemäß einer dritten Achse (X) ausgerichtet sind, die senkrecht zu der ersten Achse (Z) und der zweiten Achse (Y) verläuft, wobei der Sitz (8₁) zvei zusätzliche Öffnungen (9') enthält, die jeweils mit den beiden zusätzlichen Taschen in Verbindung stehen, und das Befestigungsorgan (10) einen zusätzlichen verengten Kanal (C') enthält, der mit den beiden zusätzlichen Öffnungen (9') in Verbindung steht, um die beiden zusätzlichen dichten Taschen (A', B') zu verbinden, und wobei das zweite Ende jeder deformierbaren Wandung (6) mit einer starren, ringförmigen Wand (15) verbunden ist, die sich ausgehend von der zweiten Armatur (2) in Richtung der ersten Achse (Z) erstreckt, und das Schichtelement (5') selbst ringförmig und um die starre, ringförmige Wand (15) angeordnet ist.

8. Lager nach Anspruch 7, bei dem jede zusätzliche dichte Tasche (A', B') an zwei dichte Taschen (A, B) angrenzt, die die Schwingungen längs der zweiten Achse (Y) dämpfen, und bei dem die deformierbaren Wandungen (6) radiale Trennwände (16) enthalten, die zwei aneinandergrenzenden, dichten Taschen gemeinsam sind.

9. Lager nach Anspruch 1, bei dem jede deformierbare Wandung eine nachgiebige Membran (6') ist, die die Form eines Umdrehungszylinders um die zweite Achse (Y) hat, wobei das zweite Ende (6₂') der deformierbaren Wandung an einem starren Finger (18) befestigt ist, der in Richtung der zweiten Achse (Y) angeordnet und an der zweiten Armatur befestigt ist, und bei der das zweite Ende der deformierbaren Wandung in das Innere der erwähnten deformierbaren Wandung unter Bildung wenigstens einer ringförmigen Falte (19) eindringen kann.

10. Lager nach Anspruch 9, bei dem die nachgiebige Membran (6') aus elastomerem Material besteht und ferner eine Verstärkung enthält, die aus Fasern, Drähten, Gewebe oder starren Ringen besteht.

11. Lager nach einem der Ansprüche 9 und 10, welches außerdem zwei Führungsringe (25) enthält, die mit der ersten Armatur (1) verbunden sind, deren innere Oberfläche um eine der nachgiebigen Membranen (6') angeordnet ist und die so ausgebildet sind, daß sie die nachgiebige Membran führen und diese abstützen, wobei jeder starre Finger (18) im übrigen eine äußere Oberfläche aufweist, die ebenfalls für die Führung einer der nachgiebigen Membranen und deren Abstützung ausgebildet ist.

12. Hubschrauberrotor (27), der eine Nabe (28) enthält, die eine Drehachse und Flügel (26) aufweist, die an der Nabe (28) befestigt sind und von denen sich jede gemäß einer Längsachse erstreckt, die im wesentlichen senkrecht zur Drehachse verläuft, dadurch gekennzeichnet, daß jeder Flügel (26) an der Nabe (28) unter Einfügen wenigstens eines Antischwingungslagers gemäß einem der vorhergehenden Ansprüche befestigt ist, wobei eine der Armaturen (1, 2) des Antischwingungslagers mit der Nabe (28) und seine andere Armatur mit dem Flügel (26) verbunden ist und die erste Achse (Z) des Antischwingungslagers parallel zur Drehachse der Nabe und die zweite Achse (Y) des Antischwingungslagers parallel zur Längsachse des Flügels verläuft.

## Claims

1. An antivibration device designed to be interposed between two rigid elements for mounting helicopter blades, the device comprising:
first and second rigid strength members (1, 2) suitable for securing to respective ones of the two rigid elements to be united, each strength member (1, 2) having a bearing face (3, 4) facing the other rigid strength member, the two bearing faces being disposed opposite each other and perpendicularly to a first axis Z; and
at least one laminated element (5, 5') interposed between the two bearing faces (3, 4), said laminated element having two opposite faces that are secured to respective ones of the two bearing faces, said laminated elements being made up of alternating layers of rigid material and of elastomer which are disposed perpendicularly to the first axis Z, said laminated element being capable of deforming to permit relative displacement of the two strength members along a second axis Y perpendicular to the first axis Z;
the device being characterized in that it further comprises a hydraulic damper having at least two deformable leakproof chambers (A, B) interconnected by a narrow channel (C), the two leakproof chambers and the narrow channel being filled with a liquid, each leakproof chamber being delimited, at least in part, by a deformable wall (6, 6') which extends between a first end (6₁, 6₁') secured to the first strength member (1) and a second end (6₂, 6₂') secured to the second strength member (2), said deformable wall, on deforming, permitting relative movement of said first and second ends parallel to the second axis Y.

2. A device according to claim 1, in which the deformable wall (6) of each sealed chamber is made of elastomer and exerts a resilient return force on the strength members (1, 2) when it is deformed.

3. A device according to claim 1 or 2, in which the deformable walls (6) of the two leakproof chambers (A, B) are side walls which define said leakproof chambers perpendicularly to the second axis Y, the deformable walls (6) being integrally formed in an elastomer body (7) which presents a central portion (8) connected in leakproof manner to the first ends (6₁) of said deformable walls, said central portion defining a housing (8₁) extending parallel to the first axis Z and open adjacent to the first strength member (1), said housing communicating with the two leakproof chambers (A, B) via two respective openings (9), the first strength member including a fixing member (10) which is engaged in sealed contact inside the housing (8₁), the narrow channel (C) that interconnects the two leakproof chambers being formed through the fixing member and communicating with the openings (9) of the housing (8₁).

4. A device according to claim 3, in which the deformable walls (6) flare towards their second ends (6₂).

5. A device according to claim 3 or 4, in which the elastomer body (7) is housed inside a rigid peripheral wall (11) which extends from the second strength member (2) along the first axis Z, the second end (6₂) of each deformable wall being fixed to said rigid peripheral wall, said rigid peripheral wall being disposed between two laminated elements (5) along a third axis X perpendicular to the first axis Z and to the second axis Y, the rigid peripheral wall constituting an abutment that limits deformation of the two laminated elements parallel to the third axis X.

6. A device according to any one of claims 3 to 5, in which the second end (6₂) of each deformable wall is secured to a rigid frame (12) and co-operates with said frame to form an outwardly directed peripheral flange (13) on which a metal plate (14) is crimped which closes said second end of the deformable wall.

7. A device according to claim 4, in which the elastomer body (7) further includes two additional leakproof chambers (A', B') similar to the above-mentioned leakproof chambers (A, B), said additional leakproof chambers (A', B') being in alignment along a third axis X that is perpendicular to the first axis Z and to the second axis Y, the housing (8₁) including two additional openings (9') that communicate with respective ones of said two additional leakproof chambers, the fixing member (10) including an additional narrow channel (C') putting the two additional leakproof chambers (A', B') into communication with each other via the two additional openings (9'), the second end of each deformable wall (6) being secured to a rigid annular wall (15) which extends from the second strength member (2) along the first axis Z, the laminated element (5') itself being annular and being disposed around the rigid annular wall (15).

8. A device according to claim 7 in which each additional leakproof chamber (A', B') is contiguous with both first-mentioned leakproof chambers (A, B) that damp vibration along the second axis Y, and the deformable walls (6) comprise radial partitions (16) that are common to contiguous pairs of chambers.

9. A device according to claim 1, in which each deformable wall is a flexible membrane (6') that is circularly symmetrical about the second axis Y, the second end (6₂') of each deformable wall being fixed to a corresponding rigid finger (18) which extends along the second axis Y and which is secured to the second strength member, said second end of the deformable wall being adapted to penetrate inside said deformable wall, forming at least one annular fold (19).

10. A device according to claim 9, in which the flexible membrane (6') is made of elastomer and further includes reinforcement selected from the group comprising: fibers, threads, cloth, and rigid rings.

11. A device according to claim 9 or 10, further including two rigid guide rings (25) which are secured to the first strength member (1) and each of which presents an inside surface disposed around one of the flexible membranes (6') and shaped to guide said flexible membrane by serving as a bearing surface therefor, each rigid finger (18) also having an outside surface that is likewise shaped to guide a corresponding one of said flexible membranes by serving as a bearing surface therefor.

12. A helicopter rotor (27) including a hub (28) having an axis of rotation and blades (26) fixed to the hub (28) and each extending along a longitudinal axis that is substantially perpendicular to the axis of rotation, the rotor being characterized in that each blade (26) is fixed to the hub (29) via at least one antivibration device according to any preceding claim, one of the strength members (1, 2) of said antivibration device being secured to the hub (28) and its other strength member being secured to the blade (26), the first axis Z of the antivibration device being parallel to the axis of rotation of the hub, and the second axis Y of said antivibration device being parallel to the longitudinal axis of the blade.
